(19) Europäisches Patentamt
European Patent Office
Office européen des brevets

(11) EP 3 719 698 A1

(12) EUROPEAN PATENT APPLICATION

(43) Date of publication:
07.10.2020 Bulletin 2020/41

(51) Int Cl.:
G06K 9/00 (2006.01)    G06K 9/20 (2006.01)
G06K 9/62 (2006.01)

(21) Application number: 19305451.7

(22) Date of filing: 05.04.2019

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(71) Applicant: GEMALTO SA
92190 Meudon (FR)

(72) Inventor: BENDIB, Mohamed Mokhtar
92190 Meudon (FR)

(74) Representative: Thomas, Christine Marie Catherine
Thales Dis France SA
Intellectual Property Department
6, rue de la Verrerie
92190 Meudon (FR)

(54) AUTOMATIC DETECTION OF FIELDS IN OFFICIAL DOCUMENTS HAVING A STABLE PATTERN

(57) The present invention describes a method that automatically detects a stable pattern (MRZ) in official documents, typically passports, and uses it as a reference to extract other relevant fields in a relative way.

The detection of the MRZ goes through the following workflow: filtering, thresholding, region growing, and centers of mass computation. Then, multiple agents are deployed in the image to look for the MRZ segments. Once the segments detected, geometrical constrains are applied to: determine the upper / lower segment, make them point to the same direction and define origin points on both of them.

A first axe is built upon the upper MRZ segment allowing to move horizontally. Then, a second axe is built upon a vector that joins the lower and upper segments allowing to move vertically. These two axes taken together denote a reference system that allows to express any point in the passport image relatively to the MRZ.

Relevant fields on passports can be expressed with the above-mentioned reference system and be accurately extracted in different circumstances insuring a rotation, scale and translation invariance.

FIG.8

EP 3 719 698 A1

**Description**

## FIELD OF THE INVENTION

The present invention relates to a method to automatically locate relevant fields in an image of official documents as acquired using a document reader. The invention also pertains to a device implementing said method.

## BACKGROUND OF THE INVENTION

Optical characters recognition (OCR) is the process that transforms an image to a text. Prior to the OCR, the fields or regions of a scanned document that contain text must be localized to be extracted properly. However, the localization process often makes strong assumptions about the position of the regions in the input image. Example of these assumptions are given below:

◦ The field surname starts from the pixel 50 from the right and 40 from the top.

◦ The image of the document is well oriented, i.e. the top of the image is actually the top of the document, and the same for the bottom.

◦ The image of the document has a specific resolution.

The problem with these assumptions is that if the document is shifted, rotated or has a different scale or resolution, the extraction process will not catch the right regions and thus, the OCR step will fail.

The Machine Readable Zone (MRZ) is an example of a field whose detection is widely investigated. Many methods have been created for that purpose. Some of them combine thresholding and mathematical morphology and can achieve reasonable results in some circumstances. Nevertheless, they are often limited by the size of the structuring element which assumes that the resolution of the input images is stable. Consequently, they are not scale independent.

Another category of methods relies on templates where each field is for example expected to:

◦ Appear in a specific place.

◦ Have a specific size.

◦ Be rotated at 90 degrees.

◦ Etc.

Then, the template is just superposed to the input image to extract the content. Note that if the image does not comply with the template, the extraction will lead to wrong results.

Further alternative and advantageous solutions would, accordingly, be desirable in the art.

## SUMMARY OF THE INVENTION

The present invention proposes to provide a method to extract relevant fields while insuring a rotation, scale and translation invariance.

The present invention is defined, in its broadest sense, as a method to automatically extract at least one relevant field in an image of an official document of a given kind insuring a rotation, scale and translation invariance, given the presence of a stable pattern consisting of one or multiple chains of equally spaced elements of a specific length and common to any official document of this kind, said method comprising the steps of:

- processing the image to detect the stable pattern, said processing step comprising :

◦ a filtering sub-step,
◦ a thresholding sub-step, to separate the foreground from the background,
◦ a regions growing sub-step consisting of looping through the thresholded image and seeding every black region to catch its pixels,
◦ a computation of centers of mass sub-step,
◦ a sub-step of randomly deploying multiple agents in the image, to search for the stable pattern, said agents having a location, an adjustable and analyzable vision field, as well as constraints on how to find the elements that belong to the stable pattern,

- transforming the stable pattern detected in the image to a referential to relatively locate other relevant fields in the image of the official document, said transformation step comprising:

  ◦ a sub-step of definition of an upper and lower segments,
  ◦ a sub-step of making both segments point to the same direction using the geometrical properties of the stable pattern,
  ◦ a sub-step of considering the upper segment as a first artificial axe along which it is possible to move,
  ◦ a sub-step of defining a second artificial axe perpendicular to the first one by computing a vector that is perpendicular to the stable pattern,

- defining regions in the image as a set of four points each, which result in a relative template,
- using the relative template and the same stable pattern detection process to extract the relevant fields from new images.

The invention proposes to automatically detect a stable pattern, typically a Machine Readable Zone (MRZ), in official documents and use it as a reference to locate and extract other relevant fields in a relative way.

The proposed method is able to extract any field relatively to an MRZ no matter the orientation, the scale or the translation of the document. Even if the document is put wrongly inside the reader, the system is able to locate the relevant fields.

According to an advantageous feature, the method of the invention further comprises a step of determining an origin point on one of the segments to move along the corresponding line by using a fraction of the total line length.

According to another advantageous feature, the method further comprises a step of moving along the remaining segment using the same fraction of the total line length, the two resulting points defining a vector perpendicular to both segments.

Advantageously, the image is an infrared acquired image.

Such images are particularly adapted to the method of the invention.

According to a preferred embodiment, the method further comprises a step of defining relevant fields in a relative template.

Indeed, the definition of the regions results in a relative template. This supervised process is a one shot process performed only in the beginning. Once the template defined, it can be used to perform the automatic extraction of the fields under different circumstances, i.e. rotation, translation, scale, as long as the stable pattern is detected properly.

Advantageously, the method further comprises a step of automatically extracting the previously defined relevant fields from new images by detecting the stable pattern and using it as a reference to localize the content of the relative template.

In a preferred application of the invention, the stable pattern is a Machine Readable Zone having at least one line.

Such an application is based on the presence of an MRZ comprising at least one segment according to the standard. The invention is particularly adapted to such a situation and enables very reliable detection of relevant fields.

The present invention also relates to an official document reader adapted to automatically locate relevant fields in an image of an official document of a given kind, given the presence of a stable pattern consisting of one or multiple chains of equally spaced elements of a specific length and common to any official document of this kind, said reader comprising an acquisition module adapted to acquire an image of an official document and a processor adapted to process the image to detect the stable pattern by filtering and thresholding the image to separate the foreground from the background, by applying a regions growing consisting of looping through the thresholded image and seeding every black region to catch its pixels, by computing centers of mass, by randomly deploying multiple agents in the image to search for the stable pattern, said agents having a location, an adjustable and analyzable vision field, as well as constraints on how to find the elements that belong to the stable pattern, said processor being further adapted to transform the stable pattern as detected in the image to relatively locate other relevant zones in the image of the official document by defining of an upper and lower segment, making both segments point to the same direction using the geometrical properties of the stable pattern, considering the upper segment as a first axis along which it is possible to move, defining a second axis perpendicular to the first one by computing a vector that is perpendicular to the stable pattern segments, said processor being further adapted to detect the relevant fields to be located relatively to first and second axes.

Such a document reader implementing the method of the invention is able to extract any relevant field even if the acquisition of the document image was approximatively performed and if the resulting image has defaults.

To the accomplishment of the foregoing and related ends, one or more embodiments comprise the features hereinafter fully described and particularly pointed out in the claims.

## BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.

- Figure 1 represents a image of an official document of the kind processed by the invention;
- Figure 2 shows such a document image after a first step of thresholding;
- Figure 3 shows the same document image after a step of computation of the center of mass;
- Figure 4 shows the stable pattern as recognized using multi-agents approach in the image of the official document of the preceding figures;
- Figure 5 shows the result of the recognition of an origin point in the stable pattern;
- Figure 6 illustrates the definition of a first axe as the upper part of the stable pattern;
- Figure 7 shows how a second axe corresponding to a vertical direction is defined between two parts of the stable pattern;
- Figure 8 illustrates how the first and second axes are used to locate a specific point in the image in the acquired official document;
- Figures 9A, 9B, 9C, 9D, 9E, 9F schematically show different application of the invention to different image configurations to extract the field place of birth which is HONG KONG , respectively the normal image, the image rotated by 90 degrees to the left, the image rotated by 90 degrees to the right, the upside-down image, the image shifted to the right, the down-scaled image;
- Figure 10 schematically shows a flowchart of the method of the invention.

## DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

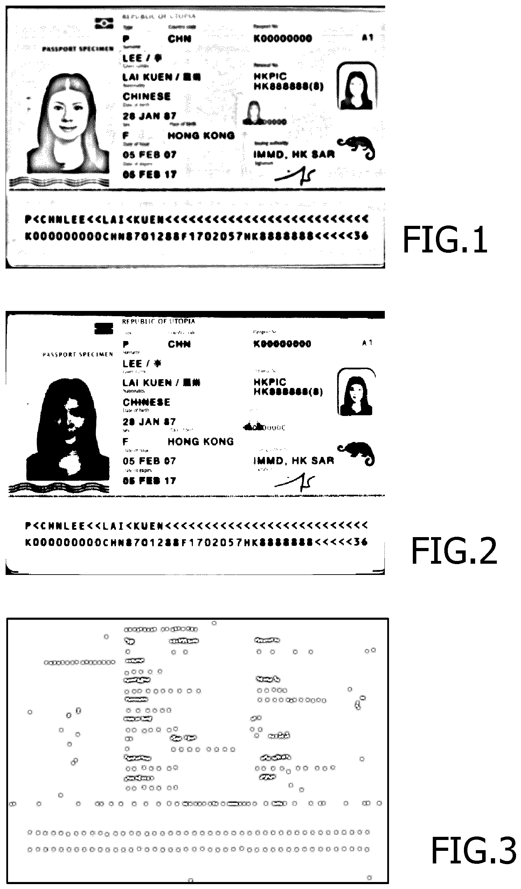

Figure 1 represents an image of an official document of the kind processed by the invention after a first step of filtering. Such an image is generally not centred, not strictly aligned with horizontal and vertical direction and may have other default that cannot be easily managed by the state-of-the-art methods.

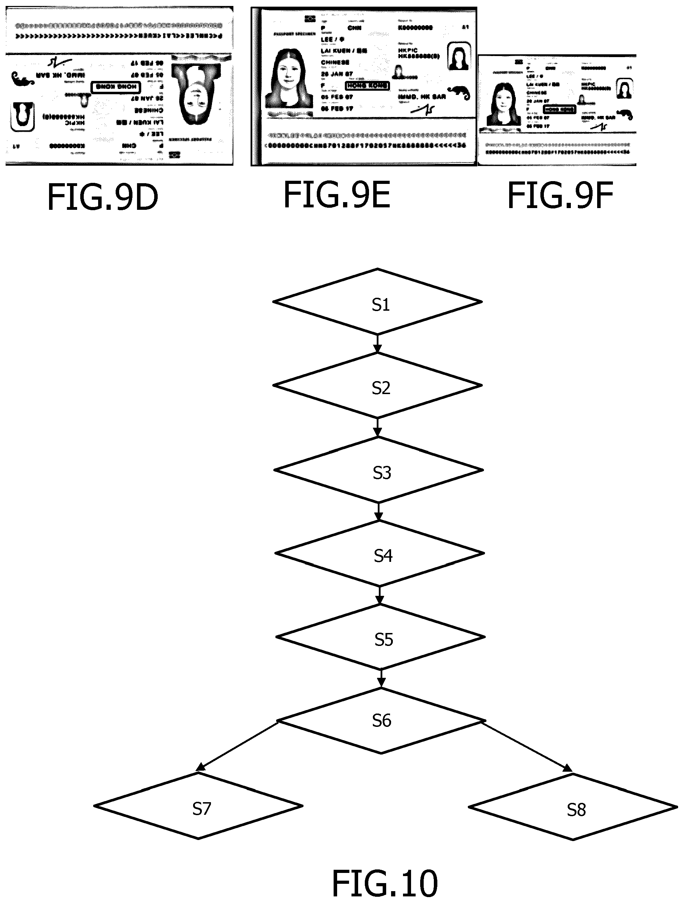

As shown on figure 10, the first step S1 consists of filtering the official document image, typically an infrared image. The filtering is performed using a median filter with a 3*3 kernel. The filtering enables to smooth the signal and provides an enhanced image to the subsequent steps. Figure 1 shows such an image after this first step S1.

Then, a second step S2 of thresholding is performed. Advantageously, this thresholding consists of an Otsu thresholding allowing to separate the foreground from the background. It also contributes to highlight the text areas. The result is shown in figure 2.

Then, a step S3 of region growing is performed. It consists of looping through the thresholded image and seeding every black region encountered. Each seed will grow and catch all the points that belong to that region. At the end, all the regions are captured.

Then, a step S4 of centers of mass computation is performed. The purpose here is to simplify the processing. Indeed, it is easier to consider points instead of entire regions. Figure 3 shows the centers of mass obtained.

To search for the points that belong to the MRZ, multiple agents are thus randomly deployed in the image in a step S5. Each agent has a position i.e. one of the centers of mass, a vision field that can be adjusted and analyzed, constraints on what to find, here the MRZ and how to find it, as well as the ability to build a chain of points stratifying the abovementioned constraints.

In the proposed approach, detecting the MRZ goes through the detection of its segments one by one. Detecting an MRZ segment requires to find a feature that makes it stands out from the rest of the patterns present in the image.

The MRZ segment feature is defined as "a chain containing 44 equally-spaced points". As depicted in figure 3, the points in a MRZ segment, whether the upper or the lower one, are not strictly equally-spaced. Thus, a margin around a reference distance computed upfront between two points of the chain is needed to answer the question "does a chain contain points that are equally-spaced?". This margin is set to 33% in the implementation of the invention.

In the invention, an agent is a software entity which goal is to find an MRZ segment. Its behavior can be described as follows:

**Inputs:**

A starting position: it should be one of the centers of mass, randomly selected.

A vision field: consisting of a window, typically around the starting position 3*3.

The size of the chain that should be found, here 44.

The vision field growing step which is used to expand the vision field, here set to 2.

The agent lifecycle is defined by two main steps, initial grow and main grow:

**Initial grow:**

The purpose of the initial grow step is to reach a new point and compute some reference measures that will be used for the subsequent exploration.

1-The starting point is added to the agent chain.

2-Then, the vision field is expanded till a new center of mass is detected. In case multiple points are detected, one of them is randomly selected.

3-The distance between the starting point and the new point is computed and is stored as the reference distance for this agent.

4-In the same way, the size of the vision field that was necessary to detect the new point is also stored as the reference vision field size.

**Main grow:**

This step is meant to grow a chain based on the reference measures that have been computed during the initial grow step. The following procedure is repeated till it is not possible to grow anymore:

1-Take the last point added to the chain.

2-Define the vision field as a window whose size is equal to the reference vision field size computed during the initial grow step.

3-Detect the points that are in the vision field if any. If nothing is detected, grow the vision field by adding to it the vision field growing step and repeat the detection process. Maximal growing size is two times the reference vision field size.

4-The detection process can produce the following results:

- One point detected: the distance between this point and the last point is computed and compared to the reference distance grabbed from the initial grow step. If the distance is compliant then the point is added to the chain. If not, the chain stops growing.
- Two points detected: the distances to these two points are computed. If one of them is compliant, add it to the chain. If both are compliant, take one of them randomly and add it to the chain. If none of them is compliant, the chain stops growing.
- Three or more points detected, which indeed never happens in the MRZ region, the chain stops growing.

As said previously, the agent's starting point is randomly chosen. Thus, different scenarios can appear.

The best scenario is where the starting point is randomly chosen as one extremity of an MRZ segment. In this case, the initial grow step will find the second point as the closest point. Then, the main grow step will catch the rest of the chain till the end.

If the starting point is taken from areas that are not related to the MRZ, the process will just stop because it will not be able to find 44 equally-spaced points. In that case, the chain is considered as irrelevant.

Another interesting case consists of a starting point randomly chosen as a point inside the MRZ segment. The initial grow step will detect the two closest points and one of them will be selected randomly, for example the left one. The chain will then grow to the left side only. To deal with this problem, the following rule is applied: Once a chain stops to grow in a given direction, the extreme point in the opposite direction is used to restart the growing process again. This insures to catch the entire segment.

Once a chain is built, the 44 length constraint is then applied to insure that it has the required size. If it is the case, we consider that an MRZ segment has been found. If not, it is considered that the agent has found an irrelevant chain.

If an agent finds a non-compliant chain, it will randomly select a new center of mass and repeat the detection process from scratch. Also, when one agent finds a compliant chain, it terminates the other agents. The detection process is performed twice to catch both segments of the MRZ.

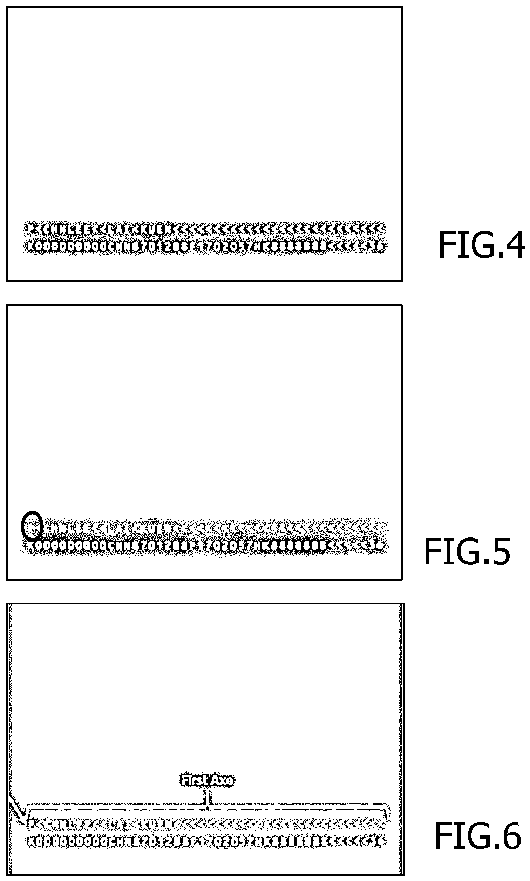

Once both MRZ segments detected as shown on figure 4, the system does not know what is the upper/lower segment. To be able to do make this distinction, for each segment, the equation of the line that links each extreme points is computed. The segment with the line that has the maximum number of points falling on one of its sides is chosen as the lower segment. Therefore, the remaining segment is considered as the upper one.

The next step is to align the segments i.e. make them point to the same direction. Indeed, from the previous step, we have two lists of points corresponding to the upper and lower segments:

$$L_{up} = p_{u1}, p_{u2}, p_{u3}, p_{un}$$

$$L_{down} = p_{d1}, p_{d2}, p_{d3}, p_{dn}$$

Checking that both segments are aligned is done by testing that:

$$|p_{u1} p_{d1}| < |p_{u1} p_{dn}|$$

If this condition is not satisfied, the order must be reversed.

Then, to detect if $p_{u1}$ is actually the upper left point of the MRZ, the following cross product formula is computed:

$$\overrightarrow{p_{d1}p_{u1}} \times \overrightarrow{p_{d1}p_{u2}}$$

If the result is lower than 0 then $p_{u1}$ is in fact the upper left point of the MRZ. This also means that $p_{d1}$ is the lower left point of the MRZ. On the other hand, if the result is greater than 0 then the upper left point of the MRZ is $p_{un}$. This also means that $p_{dn}$ is the lower left point of the MRZ. Determining the orientation as well as the origin point is illustrated in the step S6 of Figure 10.

Once the origin point detected and the orientation determined in step S6, it is possible to move along the upper segment by using a fraction F of the total segment length which is considered as 1. Indeed, the first MRZ segment can be considered as an artificial axe along which it is possible to move by resolving a quadratic equation. The later takes the fraction F, which represents a first coordinate as well as two points P1 and P2 denoting respectively the beginning and end of the segment. The equation returns the coordinates of the point that is **F** * **|P1P2|** distant from P1 in direction to P2.

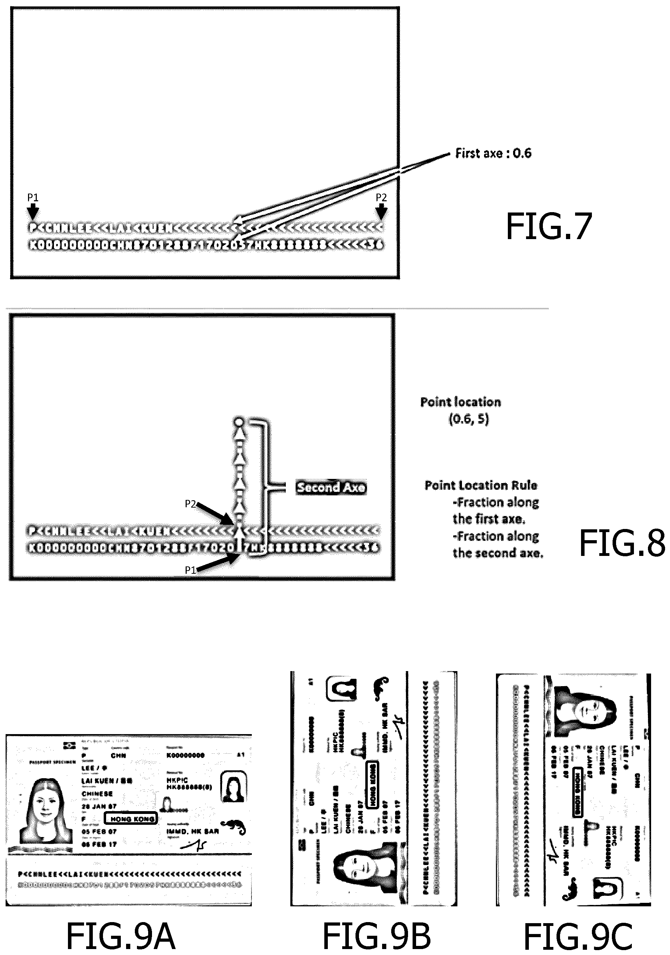

As we are dealing with a 2 dimensional signal, a second axe is needed to be able to define any point in the image. The second axe is computed by using the fraction value F on both segments, which results in a vector like shown in figure 7 and figure 8. The line that supports the vector represents the second axe.

In figure 8, a point is expressed relatively to the MRZ with the following coordinates (0.6, 5); 0.6 is the coordinate along the first axe, i.e. the upper MRZ segment, and 5 is the number of times the vertical vector has to be repeated along the second axe.

Moving along both axes vertical or horizontal can also be described by the following procedure:

**Inputs**

   **P1:** first point
   **P2:** second point

•   Note that examples of P1 and P2 are given in Figure 7 and 8.

   **Fraction F:** real number >= 0

**Steps**

Getting the point (**P3**) that is located at **Fraction** * **|P1P2|** starting from **P1** in direction of **P2,** involves the following steps:

- Compute the equation of the line that links **P1** and **P2: Y = aX +b**
- Compute the distance between **P1** and **P3** →

$$|P1P3| = \text{Fraction} * |P1P2|$$

- Resolve the following equation

$$AX^2 + BX + C = 0$$

Such as:

$$A = a^2 + 1$$

$$B = (-2 * a * y_{p1}) - (2 * x_{p1}) + (2 * a * b)$$

$$C = b^2 - (2 * b * y_{p1}) + y_{p1}{}^2 + x_{p1}{}^2 - |p1p3|^2$$

The **delta** of the above quadratic equation is always positive because there is always two points satisfying the **Fraction** * **|P1P2|** on both directions P1 → P2 and the opposite direction. The delta being positive, there are 2 solutions: $X_1$ and $X_2$. The corresponding $Y_1$ and $Y_2$ are computed this way:

$$Y_1 = a * X_1 + b$$

$$Y_2 = a * X_2 + b$$

At this stage, there are two points satisfying the **Fraction** * **|P1P2|** constraint: $(X_1, Y_1)$ and $(X_2, Y_2)$. The point with the minimal distance to P2 is selected as the final result.

In the proposed method, each region is defined as a rectangle, i.e. 4 points expressed relatively to the MRZ. All relevant regions must be defined using the new reference system in order to be extracted properly in a step S7 of Figure 10.

Figure 9A to 9F illustrates the application of the invention to different input images step S8 of figure 10. The goal is to extract the place of birth which is Hong Kong based on the following region definition:

- $P_1(0.4, 5.3)$
- $P_2(0.4, 6.3)$
- $P_3(0.63, 5.3)$
- $P_4(0.63, 6.3)$

For all the figures 9A to 9F, the proposed approach is able to detect the MRZ and relatively extract the place of birth no matter the orientation, the scale and the translation of the image. A rectangle is drawn around that field on all these images.

The proposed approach is able to find other types of MRZ by just changing the chain length to look for. Indeed, the agents can, but are not limited to, search for the most common types of MRZ:

- **One line MRZ:** by looking for 30 points length chain.
- **Two lines MRZ:** by looking for 44 points length chain and in this case, the search process is performed twice.

- **Three lines MRZ:** by looking for 30 points length chain and in this case, the search process is performed three times.

In case of 3 lines MRZ, the method behaves this way:

- The lower segment is detected the same way as before; the segment with the line $L_{lower}$ that has the maximum number of points falling on one of its side.
- Suppose that $L_1$, $L_2$ are the line equations of the remaining segments.
- The segment whose line $L_1$ or $L_2$ is the closest to $L_{lower}$ is selected as the upper segment.
- The rest of the process remains the same: segments alignment, origin points detection, axes definition, etc.

In case of one line MRZ, the method is modified as follows:

- Deploy the agents to detect the unique chain present in the image.
- Compute the equation of the line $L_{lower}$ that links the two extreme points $e_1$, $e_2$ of the chain.
- Compute the distance *refdist* between any two consecutive points of the chain.
- Compute the equation of the line that is parallel to $L_{lower}$ and *refdist* distant from it. Two lines are returned by this step.
- For each line, compute the maximum number of points falling on one of its side. Then, select the line with the minimum number as $L_{upper}$.
- Two points $p_1$, $p_2$ are defined on $L_{upper}$ such as :

   ○ $p_1$ is the intersection point of the line that goes through $e_1$ and is perpendicular to $L_{lower}$.
   ○ $p_2$ is the intersection point of the line that goes through $e_2$ and is perpendicular to $L_{lower}$.

- The rest of the process remains the same: segments alignment, origin points detection, axes definition, etc.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to automatically extract at least a relevant field from an image of an official document of a given kind insuring a rotation, scale and translation invariance, given the presence of a stable pattern consisting of one or multiple chains of equally spaced elements of a specific length and common to any official document of this kind, said method comprising the steps of:

   - processing the image to detect the stable pattern, said processing step comprising :

      ○ a filtering sub-step,
      ○ a thresholding sub-step, to separate the foreground from the background,
      ○ a regions growing sub-step consisting of looping through the thresholded image and seeding every black region to catch its pixels,
      ○ a computation of centers of mass sub-step,
      ○ a sub-step of randomly deploying multiple agents in the image to search for the stable pattern, said agents having a location, an adjustable and analyzable vision field, as well as constraints on how to find the elements that belong to the stable pattern,

   - transforming the stable pattern detected in the image to a referential to relatively locate other relevant fields in the image of the official document, said transformation step comprising:

      ○ a sub-step of defining an upper and lower segments,
      ○ a sub-step of making both segments point to the same direction using the geometrical properties of the stable pattern,
      ○ a sub-step of considering the upper segment as a first artificial axe along which it is possible to move,
      ○ a sub-step of defining a second artificial axe perpendicular to the first one by computing a vector that is perpendicular to the stable pattern segments,

- defining regions in the image as a set of four points each, which result in a relative template,
- using the relative template and the same stable pattern detection process to extract the relevant fields from new images.

2. Method according to claim 1, further comprising a step of determining an origin point on one of the segments to move along the corresponding line by using a fraction of the total line length, this fraction to be used to locate the relevant field within the whole image.

3. Method according to claim 2, further comprising a step of moving along the remaining segment using the same fraction of the total line length, the two resulting points defining a vector perpendicular to both segments.

4. Method according to one of preceding claims, wherein the image is an infrared acquired image.

5. Method according to one of preceding claims, further comprising a step of defining relevant fields in a relative template.

6. Method according to claim 5, further comprising a step of automatically extracting the previously defined relevant fields from new images by detecting the stable pattern and using it as a reference to localize the content of the relative template.

7. Method according to one of preceding claims, wherein the stable pattern is a Machine Readable Zone having at least one line.

8. An official document reader adapted to automatically extract at least one relevant field in an image of an official document of a given kind, given the presence of a stable pattern consisting of one or multiple chains of equally spaced elements of a specific length and common to any official document of this kind, said reader comprising an acquisition module adapted to acquire an image of an official document and a processor adapted to process the image to detect the stable pattern by filtering and thresholding the image to separate the foreground from the background, by applying a regions growing consisting of looping through the thresholded image and seeding every black region to catch its pixels, by computing centers of mass, by randomly deploying multiple agents in the image to search for the stable pattern, said agents having a location, an adjustable and analyzable vision field, as well as constraints on how to find the elements that belong to the stable pattern,
said processor being further adapted to transform the stable pattern as detected in the image to relatively locate other relevant zones in the image of the official document by defining of an upper and lower segment, making both segments point to the same direction using the geometrical properties of the stable pattern, considering the upper segment as a first axe along which it is possible to move, defining a second axe perpendicular to the first one by computing a vector that is perpendicular to the stable pattern segments,
said processor being further adapted to detect the relevant field to be located relatively to first and second axes.

FIG.1

FIG.2

FIG.3

FIG.4

FIG.5

FIG.6

First axe : 0.6

P1

P2

FIG.7

Point location
(0.6, 5)

Point Location Rule
-Fraction along
the first axe.
-Fraction along
the second axe.

Second Axe

P2

P1

FIG.8

FIG.9A

FIG.9B

FIG.9C

FIG.9D

FIG.9E

FIG.9F

FIG.10

Europäisches
Patentamt

European
Patent Office

Office européen
des brevets

# EUROPEAN SEARCH REPORT

Application Number

EP 19 30 5451

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/220886 A1 (CAÑERO MORALES CRISTINA [ES] ET AL) 3 August 2017 (2017-08-03) * paragraph [0014] - paragraph [0023] * * paragraph [0040] * * paragraph [0062] - paragraph [0064] * * figure 2b * | 1-8 | INV. G06K9/00 G06K9/20 G06K9/62 |
| A | US 2019/012558 A1 (DURA JEREMY NICOLAS LAURENT [FR] ET AL) 10 January 2019 (2019-01-10) * the whole document * | 1-8 | |
| A | WO 2007/117561 A2 (UNISYS CORP [US]) 18 October 2007 (2007-10-18) * the whole document * | 1-8 | |

TECHNICAL FIELDS
SEARCHED      (IPC)

G06K

The present search report has been drawn up for all claims

| Place of search | Date of completion of the search | Examiner |
|---|---|---|
| The Hague | 19 September 2019 | De Coi, Juri |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## EP 3 719 698 A1

### ANNEX TO THE EUROPEAN SEARCH REPORT
### ON EUROPEAN PATENT APPLICATION NO.

EP 19 30 5451

This annex lists the patent family members relating to the patent documents cited in the above-mentioned European search report.
The members are as contained in the European Patent Office EDP file on
The European Patent Office is in no way liable for these particulars which are merely given for the purpose of information.

19-09-2019

| Patent document cited in search report | Publication date | Patent family member(s) | Publication date |
|---|---|---|---|
| US 2017220886 A1 | 03-08-2017 | NONE | |
| US 2019012558 A1 | 10-01-2019 | EP 3425565 A1<br>FR 3068807 A1<br>US 2019012558 A1 | 09-01-2019<br>11-01-2019<br>10-01-2019 |
| WO 2007117561 A2 | 18-10-2007 | CA 2648054 A1<br>EP 2008225 A2<br>US 7813547 B1<br>WO 2007117561 A2 | 18-10-2007<br>31-12-2008<br>12-10-2010<br>18-10-2007 |

EPO FORM P0459

For more details about this annex : see Official Journal of the European Patent Office, No. 12/82